# EUROPEAN PATENT SPECIFICATION

(11) **EP 2 982 276 B1**
(45) Date of publication and mention of the grant of the patent: **06.03.2019**
(21) Application number: 14726217.4
(22) Date of filing: 01.04.2014
(51) Int. Cl.: A47J 31/00

(54) **LOW-VOLTAGE MACHINE FOR PREPARING BEVERAGES, AND METHOD FOR OPERATING THE MACHINE**
NIEDERSPANNUNGSGETRÄNKEZUBEREITUNGSMASCHINE UND VERFAHREN ZUM BETREIBEN EINER SOLCHEN MASCHINE
MACHINE DE PRÉPARATION DE BOISSONS À BASSE TENSION ET SON PROCÉDÉ DE FONCTIONNEMENT

(30) Priority: 02.04.2013 PT 10686213
(43) Date of publication of application: 10.02.2016
(73) Proprietor: Novadelta-Comércio e Industria de Cafés, Lda., 1950-041 Lisboa (PT)
(72) Inventor: NABEIRO, Rui Miguel, 7370-112 Campo Maior (PT)
(74) Representative: Miranda de Sousa, João Paulo Vaz
(86) International application number: PCT/PT2014/000020
(87) International publication number: WO 2014/163517

(56) References cited:
- EP-A2- 1 460 353
- WO-A1-2005/053489
- WO-A1-2007/017618
- WO-A1-2012/063273
- JP-A- 2004 080 965
- US-A1- 2007 193 451
- US-A1- 2007 193 451
- US-A1- 2009 084 270

## Description

### Field of the invention

The present invention refers to the field of the machines for preparation of aromatic beverages such as for example coffee of the espresso type and similar, and in particular to the operation of said machines autonomously in energy terms, i.e. without a connection to external energy sources such as for example an electrical energy distribution grid.

The present invention further refers to a process for operation of a machine for preparation of beverages with possibility of autonomous operation in energy terms.

### Background of the invention

Most of the machines for preparation of aromatic beverages, such as for example coffee of the espresso type and similar, operates based upon the supply of electrical energy by an external energy source, typically in the form of a fixed electricity distribution grid. The possibility of a machine of this type to operate autonomously from a fixed grid presents several advantages to certain types of portable use thereof.

In this sense, there are already known several solutions in prior art relating to said type of machines with operation autonomously from an external energy source, including portable machines (e.g., US 6,123,010), and manual trolleys including said type of machines (e.g., CH 699674 A2). In all these cases, after the use of the energy available in respective energy storage devices, embodied for example as batteries or similar devices, it will be necessary to charge these before being able to use said machine again. Such an interruption of operation until the batteries are minimally charged up again represents a use constrain. The option of replacing the off-charged batteries with charged ones (e.g., WO 2012/046516 A1), adds to the cost of the machine, or to the effort of use thereof.

There are also known machines that present at least some energy consuming components operating at different voltages, eventually duplicated, according to whether the machine is in an operation mode using said storage devices, typically at low voltage direct current (DC), or connected to an external tension source, typically supplying a value of 220 V or 110 V in alternated current (AC). In this sense, the machines known in prior art are provided for operating at a given nominal tension, that is, they require changing components so as to operate at locations with different standard tensions of the power distribution grid.

The document EP 1460353 B1 discloses a beverage preparation machine that can operate either at 12/ 24 V DC or at 230 V AC without the user having to make any particular adjustments. In particular, said machine presenting an inverter for increasing the tension to this level when operating based upon battery low voltage power source. When the user connects the machine to a 12/ 24 V DC source, the inverter transforms the direct current into alternating current and feeds it to the microprocessor and the various items of equipment. As further referred in the document, an alternative coffee maker not according to the invention comprises electric equipment adapted to work only with a low voltage direct current source. This solution presents lower energy efficiency and a bigger weight due to the integration of said inverter in the portable machine.

The document WO 2006/102980 A1 presents two heating devices that are respectively actuated at a low voltage and at normal voltage from a power distribution grid. This type of solution represents a bigger number and complexity of the components in a machine.

Besides of the aforementioned aspects, it is very important that the machine can prepare a minimum number of beverages in acceptable pressure and temperature conditions when in autonomous operation mode. Given the high electrical power needs, in particular by the fluid compression and fluid heating devices, the machines that are known do not provide for the preparation of a minimum number of at least six coffees of the espresso type, preferentially at least twelve coffees of the espresso type, or equivalent energy service, successively in autonomous operation mode.

Document US 2007/0193451 A1 discloses a coffee machine with 12 V DC or alkaline battery energy supply.

Document JP 2004 080965 A refers to a pair of input terminal with which a mains AC power supply is supplied. In particular, this relates to a conventional AC power supply apparatus adapted so that provides the possibility of a device operating at either of the standard 100 to 120 or 220 to 230 V AC power grids.

None of the aforementioned documents discloses a solution in view of a flexible operation of the machine with different types of supply tensions and without the duplication of components, and consequent increase in weight and costs, and in view of an optimized management of the energy resources in a beverage preparation machine according to the type considered herewith, so as to maximize the use of energy provided by the energy storage means.

### Description of the invention

The goal of the present invention is to provide a machine for preparing beverages with possibility of operating with an internal energy source and, in case of unavailability of the latter, with possibility of preparing a beverage immediately after connection to an external energy source, including in the case the latter presents a higher voltage or not.

This goal is attained according to claim 1.

In particular, according to a first inventive aspect of the present invention, said goal is solved by means of a machine with energy distribution, use and control means provided so that they only use electricity at low voltage, and provided so that they can operate in operational connection to an internal energy source or to an external energy source, or, alternatively, with simultaneous connection to an internal energy source and to an external energy source.

According to the invention, all the electrical energy consumers in said machine are provided so that they only use electricity at between 24 V and 36 V, in direct current. The energy supply of said beverage preparation machine thus results advantageously provided by internal energy sources with high energy efficiency, including by means of direct energy supply from said internal energy sources to the electrical energy consumers, under better safety conditions and less total weight and costs, including as a result of avoiding a duplication of electrical energy consumers in said machine, and whereby the operating electrical tension of the main electrical energy consumers is appropriate to the preparation of a plurality of beverages of the espresso type, or similar.

According to another preferred embodiment, the machine according to the present invention presents an energy management device provided so that it can identify, including recognize and/or characterize, the availability of energy from said internal and/or external energy source, preferentially in each of successive moments at least during the beverage preparation period.

According to another preferred embodiment, said energy management device is provided so that it can determine when and/or which of the electrical energy consumers to be supplied by said internal energy source, or by said external energy source, or simultaneously by both types of said energy sources.

According to another preferred embodiment, said energy management device is provided so that it can determine a sequence of energy supply periods and intervals between these energy supply periods, and vary operation parameters of at least some of the electrical energy consumers, including fluid compression means and fluid heating means.

According to another preferred embodiment, said energy management device is provided so that it can limit to a maximum of 450 W, preferentially to a maximum of 350 W, the average value of power provided to said electrical energy consumers during each beverage preparation cycle.

According to another preferred embodiment, said electrical energy consumers include fluid compression means and fluid heating means and the operation parameters thereof are the same independently of the value of tension provided by said external energy source.

Another goal related to the first goal of the present invention is to provide a machine that requires no replacement of components at locations with different tensions of the electrical energy distribution grid. That is to say, a machine whose main components present similar configurations and nominal operation parameters, regardless of the nominal tension value provided by an external energy source, in particular of the type fixed power distribution grid.

This goal is solved according to the present invention by means of a machine that presents, at least temporarily, a voltage transformation device for connection to an external energy source, including in the case of transformation of an alternated current at a higher voltage (e.g., 230 V AC) to a direct current at low voltage (e.g., 36 V DC), whereby said voltage transformation device is the same regardless of the nominal tension provided by said external energy source being used. Alternatively, the machine can be connected to a low voltage external energy source, eventually by means of said voltage transformation device.

According to a preferred embodiment, the electrical energy supplied by means of connection to an external energy source of different nominal tension is ensured by means of a voltage transformation device, in particular provided by a voltage transformation device that is at least temporarily disposed in circuit between an external energy source and the low voltage components of the machine.

According to the invention, when operationally connected, said voltage transformation device is provided externally to the chassis of the machine, preferentially in a respective chassis, and with means for connecting to the machine including by means of wires or wirelessly.

According to the invention, said voltage transformation device is a large entry interval voltage device.

According to another preferred embodiment, said voltage transformation device presents a nominal power of at most 600 W, preferentially at most 450 W.

According to another preferred embodiment, said internal energy source is provided in the form of energy storage means with a nominal capacity of energy storage and discharge sufficient to prepare at least six, preferentially at least twelve, more preferentially at least eighteen beverages, of 20 to 50 ml, with temperature requirements of between 80 °C and 100 °C and pressure of at least 8 bar, or the number of beverages with an equivalent energy service.

According to the invention, said energy storage means are provided with a maximum nominal storage capacity of 120 Wh, preferentially of 80 Wh and a discharge capacity of at least 5 C, preferentially at least 10 C.

According to the invention, said external energy source includes a power distribution grid with a voltage above 50 V, and an energy generation and/or storage device with any voltage and provided so that it can be operationally connected to the machine.

Another goal of the present invention is to provide a process that enables an optimized used of the available energy resources, in particular in view of a substantially uninterrupted availability of the machine to prepare a beverage and of a minimization of the charging period of the internal energy sources.

This goal is attained by means of a process according to which, once the machine is turned on, an energy management device identifies, including by means of recognizing and/or characterizing, the availability of energy by said at least one internal energy source and said at least one external energy source, and the energy demands by the energy consuming components provided in the machine, and determines the supply of electrical energy to the energy consumers and/or to said at least one internal energy source, whereby in case said internal energy source is unavailable, then said energy management device determines the energy supply to said energy consumers, preferentially exclusively to said energy consumers, by means of said at least one external energy source.

It thus results that the energy supply to said energy consumers is provided by said, at least one, external energy source, preferentially exclusively to these energy consumers, so as to provide the possibility of preparing a beverage shortly after, preferentially right after establishing a functional connection between the machine and said, at least one, external energy source, and so as to minimize the period of time required to charge the internal energy source without compromising the availability of the machine to prepare beverages during said period of time.

Moreover, according to the process according to the present invention, said energy management device determines the energy supply by said external energy source, at least until reaching a given charging level of said at least one internal energy source. Preferentially, the energy supply by the external energy source is maintained while the machine is connected to said external energy source.

According to a preferred embodiment, the process further includes a step in which said energy management device determines the energy supply to said at least one internal energy source in the periods of time during which a beverage is not being solicited or prepared, so as to minimize the period of time required by the charging of said internal energy source, without compromising the availability of the machine to prepare beverages during that period of time.

According to another preferred embodiment, said energy management device determines the energy supply simultaneously to said energy consumers and to said, at least one, internal energy source.

According to another preferred embodiment, said energy management device determines that the energy supply to said energy consumers is provided by the external energy source while the latter is available, even after reaching the maximum energy level in said, at least one, internal energy source.

According to another preferred embodiment, the energy supply to said at least one internal energy source is carried out by means of regulation of a pulse-width modulation signal, so as to supply a substantially constant charging current until reaching a given value of tension, whereby said value of tension is maintained until said charging current is inferior to a given, preferentially a previously defined, reference value of tension.

In the scope of the present description, by "internal energy source" there should be understood a device and/or respective operational connection means, with or without final energy generation capacity from any primary energy source, including energy storage and conversion devices, such as for example batteries and similar, and that provide the energy supply, in particular of electrical energy, without the machine for preparing beverages being connected to a fixed power distribution grid.

In the scope of the present invention, it is considered that internal energy sources correspond to temporary storage or accumulation of any energy form enabling a later supply of electrical energy, in particular those devices operating based upon an electrochemical and/or electromagnetic energy conversion process, such as for example batteries and similar, in particular at low voltage. Moreover, it is considered that the internal energy sources correspond to energy devices provided inside or outside of the machine for preparing beverages, with or without the possibility of access and/or replacement from the outside, preferentially configured for exclusive use with the machine for preparing beverages.

The machine for preparing beverages carries out a process including heating of at least one processing fluid, for example water, up to a temperature of 80 °C - 100 °C and/or the compression of at least one processing fluid up to a pressure of at least 8 bar.

The machine for preparing beverages according to the present invention is used for preparing coffee, milk, tea and similar, and uses water, milk, tea and similar as processing fluid.

### List of Figures

The invention shall now be explained in greater detail based upon preferred embodiments and the attached Figures.

The Figures show:
- Figure 1:: schematic representations in cut side view, front view and top view, of a first embodiment of a machine (1) according to the invention;
- Figure 2:: schematic representations in cut side view, front view and top view, of a second embodiment of a machine (1) according to the invention.

### Description of embodiments of the invention

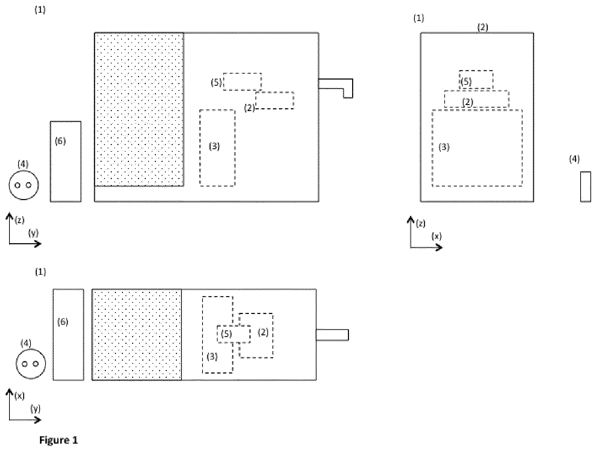

**Figure 1** presents schematic representations, in side view in the top left corner, front view in the top right corner, and in top view in the bottom left corner, of a machine (1) for preparing beverages by means of extraction of an edible aromatic substance, such as for example coffee, tea and similar. The machine (1) presents a fluid reservoir (represented with shaded area) and a plurality of energy consumers (2), including heating and compression means of a processing fluid, including water, represented jointly and in simplified manner.

According to a first inventive aspect of the invention, the machine (1) is provided with an electrical circuit and an energy management device (5) that ensure its operation only at low voltage, preferentially between 24 and 36 V, preferentially in direct current (DC), both when operating in autonomous mode and when connected to an external energy source, such as for example a fixed power distribution grid. The operation based upon a connection to an external energy source (4) is provided by means of a voltage transformation device (6).

Moreover, the machine (1) can operate in autonomous mode based upon at least one internal energy source (3) provided internally or externally to the machine chassis and in removable manner or not. In particular, said energy management device (5) identifies, including by means of recognition and characterization, the energy availability in at least one internal energy source (3), provided for example in the form of an electrochemical battery or similar, and manages the operation of charge and discharge thereof as a function of the availability of an external energy source (4) and of the requests of beverage preparation.

In this sense, if the energy level in said internal energy source (3) is below a previously defined minimum level, then the machine (1) is ready to prepare a beverage right after being connected to an external energy source (4), because the energy management device (5) determines that the latter supplies directly the energy consumers (2), and simultaneously or in the intervals between beverage preparation request, supplies said internal energy source (3). It is thus advantageously provided that the machine (1) according to the invention provides a high level of readiness to prepare a beverage, even in the period immediately after being connected to an external energy source (4) and presenting an internal energy source (3) presenting a reduced energy level.

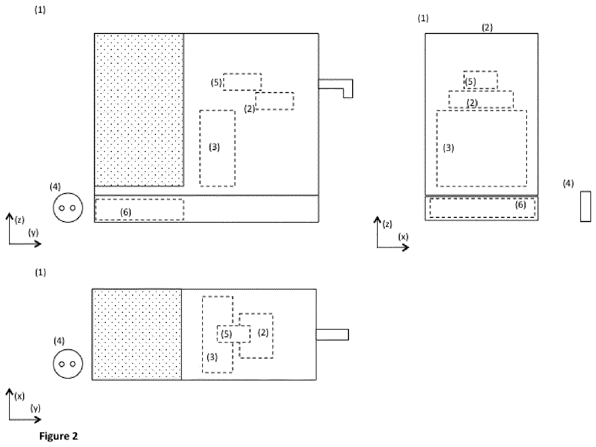

**Figure 2** shows a second embodiment of the machine (1) according to the invention, in similar manner and in views corresponding to those of Figure 1.

As aforementioned, according to another inventive aspect, the energy management device (5) and the energy consumers (2), as well as the electrical circuit, are provided so that the machine (1) always operates at low voltage direct current, below 50 V DC, preferentially between 24 V and 36 V DC. This solution presents several advantages including better safety of use and non-duplication of components, in particular of the fluid heating means. Moreover, this solution makes it possible to use always the same components, regardless of the nominal tension value of the energy distribution grid in a given country.

In this sense, the machine (1) for preparation of beverages is further provided with a voltage transformation device (6), preferentially provided as wide entry interval device for supplying direct current (DC), disposed between an external energy source (4) with voltage bigger than low voltage, and the other components of the machine (1). In particular, said voltage transformation device (6) can be provided outside of the main chassis of the machine (1), or inside thereof.

According to a preferred embodiment, the voltage transformation device (6) is provided in an element that engages in adjusted manner with a part of the chassis of the machine (1), as represented in Figure 2.

## Claims

1. Machine (1) for preparation of beverages from at least one aromatic substance, including coffee of espresso type and similar, presenting:
- a plurality of electrical energy consumers (2),
- at least one internal energy source (3),
- connection means adapted for functional connection of the machine (1) to at least one external energy source (4), and
- an energy management device (5) provided so that it can supervise and regulate the supply and distribution of electricity to at least some of said electrical energy consumers (2),
- said electrical energy consumers (2) are provided so that they can only use electrical energy at low voltage, including from said at least one internal energy source (3) or from said at least one external energy source (4) or from both these types of energy source (3, 4) simultaneously, whereby said energy management device (5) is further provided so that it can identify the availability of energy in said internal energy source (3) and/or in said external energy source (4) and determine which energy source (3, 4) to use at least as a function of the availability of energy in said internal (3) and/or in said external energy source (4),
- said external energy source (4) includes a power distribution grid with a voltage above 50 V and up to 230 V, and an energy generation and/or storage device provided so that it can be operationally connected to the machine,
**characterized**
**in that** said electrical energy consumers (2) are provided so that they can only use electrical energy at a value of voltage between 24 V and 36 V of direct current (DC),
said energy storage means (3) are provided with a maximum nominal storage capacity of 120 Wh, preferentially of 80 Wh and a discharge capacity of at least 5 C, preferentially at least 10 C,
whereby the machine (1) further presents a voltage transformation device (6) for connection to an external energy source (4) presenting a greater value of nominal voltage,
whereby said voltage transformation device (6) is provided externally to the chassis of machine (1), preferentially in a respective chassis, and with means for connecting to the machine (1), including by means of wires or wirelessly, and
whereby said voltage transformation device (6) is a large entry interval voltage device.

2. Machine (1) according to claim 1, **characterized in that** said energy management device (5) is provided so that it can determine when and/or which electrical energy consumers (2) to be supplied by said internal energy source, or by said external energy source (4), or simultaneously by both types of energy source (3, 4).

3. Machine (1) according to claims 1 or 2, **characterized in that** said energy management device (5) is provided so that it can determine a sequence of energy supply periods and intervals between these supply periods, as well as to vary operation parameters of at least some of said electrical energy consumers (2) de, including fluid compression means and fluid heating means.

4. Machine (1) according to any one of claims 1 to 3, **characterized in that** said energy management device (5) is provided so that it can limit the average value of power provided to said electrical energy consumers (2) to a maximum of 450 W, preferentially to a maximum of 350 W, during each beverage preparation cycle.

5. Machine (1) according to any one of claims 1 to 4, **characterized in that** said electrical energy consumers (2) include fluid compression means and fluid heating means and **in that** the operation parameters thereof are the same independently of the value of voltage provided by said external energy source (4).

6. Machine (1) according to any one of claims 2 to 8, **characterized in that** said voltage transformation device (6) presents a nominal power of at most 600 W, preferentially at most 450 W.

7. Process for operation of a machine (1) for preparing beverages according to any one of the previous claims 1 to 5, comprising the following steps:
- turning the machine (1) on;
- identifying, by means of the energy management device (5) provided in the machine (1), the availability of at least one internal energy source and/or of at least one external energy source (4) for supplying electrical energy to electrical energy consumers (2) provided in said machine (1),
- determining, by means of said energy management device (5), the supply of electrical energy to said electrical energy consumers (2) and/or to said at least one internal energy source (3),
whereby, in case of unavailability of the internal energy source (3), said energy management device (5) determines the supply of electrical energy to said electrical energy consumers (2) by said at least one external energy source (4), preferentially exclusively to said electrical energy consumers (2).

8. Process according to claim 7, **characterized in that** said energy management device (5) determines the supply of electrical energy to said at least one internal energy source (3) during the periods of time in which no beverage is being solicited or prepared.

9. Process according to claims 7 and 8, **characterized in that** said energy management device (5) determines the supply of electrical energy simultaneously to said electrical energy consumers (2) and to said at least one internal energy source (3).

10. Process according to claims 7 to 9, **characterized in that** said energy management device (5) determines the supply of electrical energy to said electrical energy consumers (2) by said external energy source (4) as long as the latter is available, even after reaching a maximum energy level at said at least one internal energy source (3).

11. Process according to claims 7 to 10, **characterized in that** the supply of electrical energy to said at least one internal energy source (3) is carried out by means of a pulse-width modulation signal, so as to supply a substantially constant charging electrical current until reaching a previously defined value of tension, whereby this value of tension is maintained until the charging electrical current is inferior to a given reference value of tension, preferentially to a previously defined reference value of tension.

12. Process according to claims 7 to 11, **characterized in that** said energy management device (5) provides for the display of an indicator of energy availability, preferentially discriminated by said internal energy source (3) and said external energy source (4), by means of at least one use interface of said machine (1) .

## Patentansprüche

1. Maschine (1) zur Getränkezubereitung von mindestens einer aromatischen Substanz, einschließlich Kaffee aus Espresso und Ähnliches, aufweisend:
- eine Mehrzahl von elektrischen Energieverbrauchern (2),
- mindestens eine interne Energiequelle (3),
- Verbindungsmittel angepasst an funktionstüchtiger Verbindung der Maschine (1), und zu mindestens einer externen Energiequelle (4), und
- ein Energieverwaltungsgerät (5) so vorhanden, um die Versorgung und Stromverteilung zu mindestens einer der elektrischen Energieverbrauchern (2) zu überwachen und regulieren,
- genannte elektrischen Energieverbrauchern (2) so vorhanden, um nur elektrische Energie bei niedriger Spannung zu verbrauchen, einschließlich von mindestens einer genannten internen Energiequelle (3) oder von mindestens einer genannten externen Energiequelle (4) oder gleichzeitig von beiden dieser Energiequellentypen (3, 4), wobei genanntes Energieverwaltungsgerät (5) weiterhin so vorhanden ist, um die Verfügbarkeit der Energie in genannter internen Energiequelle (3) und/oder in genannter externen Energiequelle (4) zu erkennen und zu bestimmen, welche Energiequelle (3, 4) zu verwenden als mindestens eine Funktion der Energieverfügbarkeit in genannter internen (3) und/oder in genannter externen (4) Energiequelle,
- genannte externe Energiequelle (4) beinhaltet einen Stromverteilungsnetz mit einer Spannung von über 50 V und bis zu 230 V, und einen Energieerzeuger und/oder Speichergerät so versorgt, dass es an der Maschine betrieblich verbunden werden kann,
**dadurch gekennzeichnet, dass** genannte elektrische Energieverbraucher (2) so vorhanden sind, um nur elektrische Energie bei einem Spannungswert zwischen 24 V und 36 V von Gleichstrom (GS) zu verbrauchen,
genannte Energiespeichermittel (3) sind mit einer maximal nominalen Speicherkapazität von 120 Wh versorgt, vorzugsweise von 80 Wh und einem Ausfluss von mindestens 5 C, vorzugsweise mindestens 10 C,
wodurch die Maschine (1) aufweist weiterhin einen Spannungswandler (6) zur Verbindung an eine externe Energiequelle (4) aufweisend einen höheren Wert von nominaler Spannung,
wodurch genannter Spannungswandler (6) extern an das Chassis der Maschine (1) versorgt ist, vorzugsweise in einem entsprechenden Chassis, und mit Verbindungsmitteln zur Maschine (1), einschließlich mittels Kabeln oder kabellos, und wodurch genannter Spannungswandler (6) ein großes Eingangsintervallspannungsgerät ist.

2. Maschine (1) gemäß Anspruch 1 **dadurch gekennzeichnet, dass** genanntes Energieverwaltungsgerät (5) so versorgt ist, um zu erkennen, wann und/oder welche elektrische Energieverbraucher (2) durch genannte interne Energiequelle zu versorgen ist, oder durch genannte externe Energiequelle (4), oder durch gleichzeitig beide Typen von Energiequellen (3, 4).

3. Maschine (1) gemäß Ansprüche 1 oder 2 **dadurch gekennzeichnet, dass** genanntes Energieverwaltungsgerät (5) so versorgt ist, um eine Sequenz von Energieversorgungszeiten und Pausen zwischen diesen Versorgungszeiten zu erkennen, als auch Bedienungsparametern von mindestens einigen der genannten elektrischen Energieverbrauchern (2) zu wechseln, einschließlich Fluiddruckmittel und Heizfluidmittel.

4. Maschine (1) gemäß einer der Ansprüche 1 bis 3 **dadurch gekennzeichnet, dass** genanntes Energieverwaltungsgerät (5) so versorgt ist, dass es den Stromdurchschnittswert begrenzen kann, der an genannten elektrischen Energieverbrauchern (2) bis maximal 450 W versorgt ist, vorzugsweise bis maximal 350 W, während jedem Getränkezubereitungszyklus.

5. Maschine (1) gemäß einer der Ansprüche 1 bis 4 dadurch gekannzeichnet, dass genannte elektrische Energieverbraucher (2) Fluiddruckmittel und Heizfluidmittel einschließt und dass die Bedienungsparameter davon dieselben sind, unabhängig vom Spannungswert versorgt durch genannte externe Energiequelle (4).

6. Maschine (1) gemäß einer der Ansprüche 2 bis 8 **dadurch gekennzeichnet, dass** genannter Spannungwandler (6) einen nominalen Strom von meistens 600 W aufweist, vorzugsweise meistens 450 W.

7. Verfahren zur Bedienung einer Getränkezubereitungsmaschine (1) gemäß einer der Ansprüche 1 bis 5, umfassend folgende Schritte:
- Anschalten der Maschine (1);
- Erkennung der Verfügbarkeit von mindestens einer internen Energiequelle und/oder von mindestens einer externen Energiequelle (4) zur Versorgung von elektrischer Energie zu elektrischen Energieverbrauchern (2) vorhanden in der Maschine (1) mittels des Energieverwaltungsgerät (5) vorhanden in der Maschine (1),
- Bestimmen der Versorgung von elektrischer Energie zu genannten elektrischen Energieverbrauchern (2) und/oder zu mindestens einer genannten internen Energiequelle (3) mittels genanntem Energieverwaltungsgerät (5),
wodurch, im Falle einer Unverfügbarkeit der internen Energiequelle (3), genanntes Energieverwaltungsgerät (5) die Versorgung von elektrischer Energie zu genannten elektrischen Energieverbrauchern (2) mittels mindestens einer genannten externen Energiequelle (4) bestimmt, vorzugsweise ausschließlich zu genannten elektrischen Energieverbrauchern (2).

8. Verfahren gemäß Anspruch 7 **dadurch gekennzeichnet, dass** genanntes Energieverwaltungsgerät (5) die Versorgung von elektrischer Energie zu mindestens einer internen Energiequelle (3) während der Zeiträume bestimmt, wo kein Getränk nachgefragt oder zubereitet wird.

9. Verfahren gemäß Ansprüche 7 und 8 **dadurch gekennzeichnet, dass** genanntes Energieverwaltungsgerät (5) die Versorgung von elektrischer Energie gleichzeitig zu genannten elektrischen Energieverbrauchern (2) und zu mindestens einer genannten internen Energiequelle (3) bestimmt.

10. Verfahren gemäß Ansprüche 7 bis 9 **dadurch gekennzeichnet, dass** genanntes Energieverwaltungsgerät (5) die Versorgung von elektrischer Energie zu genannten elektrischen Energieverbrauchern (2) mittels genannter externen Energiequelle (4) bestimmt, solange das Letzte verfügbar ist, noch bevor eine maximale Energieebene bei mindestens einer genannten internen Energiequelle (3) erreicht wurde.

11. Verfahren gemäß Ansprüche 7 bis 10 **dadurch gekennzeichnet, dass** die Versorgung von elektrischer Energie zu mindestens einer genannten internen Energiequelle (3) mittels eines Pulsweitenmodulationssignals so durchgeführt wird, um wesentlich einen konstanten elektrischen Ladestrom zu versorgen, bis es einen vorher definierten Spannungswert erreicht, wobei dieser Spannungswert erhalten ist, bis der elektrische Ladestrom unterhalb eines gegebenen hingewiesenen Spannungswert liegt, vorzugsweise eines vorher definierten hingewiesenen Spannungswertes.

12. Verfahren gemäß Ansprüche 7 bis 11 dadurch gekannzeichnet, dass genanntes Energieverwaltungsgerät (5) die Anzeigevorrichtung von Energieverfügbarkeit versorgt, vorzugsweise unterschieden durch genannte interne Energiequelle (3) und genannte externe Energiequelle (4), mittels mindestens einer Schnittstelle von genannter Maschine (1) .

## Revendications

1. Machine (1) pour la préparation de breuvages depuis au moins une substance aromatique, y compris du café de type expresso et similaire, présentant :
- une pluralité de consommateurs d'énergie électrique (2),
- au moins une source d'énergie interne (3),
- des moyens de connexion adaptés à la connexion fonctionnelle de la machine (1) à au moins une source d'énergie externe (4), et
- un dispositif de gestion d'énergie (5), fourni afin qu'il puisse superviser ou réguler l'approvisionnement et la distribution de l'électricité vers au moins quelques-uns des dits consommateurs d'énergie électrique (2),
- les dits consommateurs d'énergie électrique (2) sont fournis afin qu'il ne puissent utiliser que l'énergie électrique à faible tension, y compris depuis au moins l'une desdites sources d'énergie interne (3) ou au moins depuis l'une desdites sources d'énergie externe (4) ou depuis deux de ces types de source d'énergie (3, 4) simultanément, où ledit dispositif de gestion d'énergie (5) est également fourni afin qu'il puisse identifier la disponibilité de l'énergie dans ladite source d'énergie interne (3) et/ou dans ladite source d'énergie externe (4) et déterminer quelle source d'énergie (3, 4) à utiliser au moins comme fonction de la disponibilité de l'énergie dans ladite interne (3) et/ou ladite source d'énergie externe (4),
- ladite source d'énergie externe (4) inclut une grille de distribution d'énergie avec une tension supérieure à 50 V et jusqu'à 230 V ainsi qu'une génération d'énergie et/ou un dispositif de stockage fourni afin qu'il soit connecté de forme opérationnelle à la machine,
**caractérisé par le fait que** les consommateurs d'énergie électrique (2) sont fournis afin qu'ils n'utilisent que de l'énergie électrique à une valeur de tension entre 24 V et 36 V du courant direct (CC),
lesdits moyens de stockage d'énergie (3) sont fournis avec un maximum de capacité de stockage nominal de 120 Wh, de préférence de 80 Wh et une capacité de décharge d'au moins 5 C, de préférence d'au moins 10 C,
où la machine (1) présente aussi un dispositif de transformation de tension (6) pour la connexion à une source d'énergie externe (4) présentant une plus grande valeur de la tension nominale,
où ledit dispositif de transformation de tension (6) est fourni de manière externe au châssis de la machine (1), de préférence dans un châssis respectif, et avec des moyens pour connecter à la machine (1), y compris par des moyens avec ou sans fils, et
où ledit dispositif de transformation de tension (6) est un dispositif de tension à large intervalle d'entrée.

2. Machine (1) selon la revendication 1, **caractérisée par** le fait ledit dispositif de gestion d'énergie (5) est fournie afin qu'il soit possible de déterminer quand et/ou quels consommateurs d'énergie électrique (2) doivent être fournis par ladite source d'énergie interne ou par la source d'énergie externe (4) ou simultanément par les deux types de source d'énergie (3, 4).

3. Machine (1) selon les revendications 1 ou 2, **caractérisée par le fait que** ledit dispositif de gestion d'énergie (5) est fourni afin qu'il soit possible de déterminer une séquence de périodes d'approvisionnement d'énergie et d'intervalles entre ces périodes d'approvisionnement, ainsi que pour varier les paramètres d'opération d'au moins quelques-uns des dits consommateurs d'énergie électrique (2), y compris des moyens de compression du fluide et des moyens d'échauffement du fluide.

4. Machine (1) selon une quelconque revendication entre 1 et 3, **caractérisée par le fait que** le dispositif de gestion d'énergie (5) est fourni afin qu'il puisse limiter la valeur moyenne de l'énergie fournie vers les consommateurs d'énergie électrique (2) à un maximum de 450 W, de préférence à un maximum de 350 W, pendant chaque cycle de préparation de breuvage.

5. Machine (1) selon une quelconque revendication entre 1 et 4, **caractérisée par le fait que** lesdits consommateurs d'énergie électrique (2) incluent des moyens de compression du fluide et des moyens d'échauffement du fluide et **par le fait que** les paramètres d'opération susmentionnés sont les mêmes indépendamment de la valeur de la tension fournie par ladite source d'énergie externe (4) .

6. Machine (1) selon une quelconque revendication entre 2 et 8, **caractérisée par le fait que** ledit dispositif de transformation de tension (6) présente une puissance nominale d'au moins 600 W, de préférence 450 W, au maximum.

7. Processus pour le fonctionnement d'une machine (1) pour la préparation de breuvages selon une quelconque des revendications antérieures entre 1 et 5, comprenant les étapes suivantes :
- mettre en marche la machine (1) ;
- identifier au moyens du dispositif de gestion d'énergie (5) fourni dans la machine (1), la disponibilité d'au moins une source d'énergie interne et/ou d'au moins une source d'énergie externe (4) pour fournir de l'énergie électrique aux consommateurs d'énergie électrique (2) fourni dans ladite machine (1),
- déterminer au moyen dudit dispositif de gestion d'énergie (5), l'approvisionnement d'énergie électrique vers lesdits consommateurs d'énergie électrique (2) et/ou vers au moins l'une des sources d'énergie interne (3),
où, en cas d'indisponibilité de la source d'énergie interne (3), ledit dispositif de gestion d'énergie (5) détermine l'approvisionnement de l'énergie électrique vers lesdits consommateurs d'énergie électrique (2) par au moins l'une des dites sources d'énergie externe (4), de préférence exclusivement vers lesdits consommateurs d'énergie électrique (2).

8. Processus selon la revendication 7, **caractérisé par le fait que** ledit dispositif de gestion d'énergie (5) détermine l'approvisionnement de l'énergie électrique vers au moins l'une des dites sources d'énergie interne (3) pendant les périodes de temps dans lesquelles aucun breuvage n'est sollicité ou préparé.

9. Processus selon les revendications 7 et 8, **caractérisé par le fait que** ledit dispositif de gestion d'énergie (5)détermine l'approvisionnement d'énergie électrique simultanément vers lesdits consommateurs d'énergie électrique (2) et vers au moins l'une des dites sources d'énergie interne (3).

10. Processus selon les revendications entre 7 et 9, **caractérisé par le fait que** ledit dispositif de gestion d'énergie (5) détermine l'approvisionnement d'énergie électrique vers lesdits consommateurs d'énergie électrique (2) par ladite source d'énergie externe (4) aussi longtemps que cette dernière reste disponible, même après avoir atteint un niveau d'énergie maximal d'au moins l'une des dites sources d'énergie interne (3).

11. Processus selon la revendication entre 7 et 10, **caractérisé par le fait que** l'approvisionnement d'énergie électrique vers l'une des dites sources d'énergie interne (3) est effectué au moyens d'un signal de modulation d'impulsions en largeur, afin de substantiellement fournir un courant électrique de chargement constant jusqu'à atteindre une valeur définie préalablement, où cette valeur de tension est maintenu jusqu'à ce que le courant électrique de chargement soit inférieur à une valeur de référence donnée de tension, de préférence à une valeur de référence préalablement définie de tension.

12. Processus selon les revendications entre 7 et 11, **caractérisé par le fait que** ledit dispositif de gestion d'énergie (5) fournit à l'affichage d'un indicateur de disponibilité d'énergie, de préférence discriminé par ladite source d'énergie interne (3) et ladite source d'énergie externe (4), au moyens d'au moins d'une interface d'utilisation de ladite machine (1).
